# EUROPEAN PATENT APPLICATION

(11) **EP 4 484 397 A1**
(43) Date of publication of application: **01.01.2025**
(21) Application number: 23290024.1
(22) Date of filing: 29.06.2023
(51) Int. Cl.: C04B 18/14, C04B 28/08

(54) **METHOD OF REDUCING THE AMOUNT OF AT LEAST ONE METALLIC COMPONENT OF AN INPUT MATERIAL**

(71) Applicant: Holcim Technology Ltd, 6300 Zug (CH)
(72) Inventor: MAJOULET, Olivier, 38070 Saint-Quentin-Fallavier (FR); BERMEJO, Edelio, 38070 Saint Quentin Fallavier (FR); GUYOT, Christophe, 38070 Saint Quentin Fallavier (FR)
(74) Representative: SONN Patentanwälte GmbH & Co KG

(57) **Abstract**

A method of reducing the amount of at least one metallic component of an input material, said input material comprising a plurality of entangled solid phases comprising at least one crystallized calcium based mineral phase and at least one metal oxide based phase, which contains said metallic component, comprising the steps of:
a) grinding the input material by applying combined compression and shearing stress to obtain particles having a particle size of < 300 um, preferably < 150 µm, the particles comprising metallic particles and non-metallic particles,
b) separating the metallic particles from the non-metallic particles by means of a separator.

## Description

The invention refers to a method of reducing the amount of at least one metallic component of an input material, said input material comprising a plurality of entangled solid phases comprising at least one crystallized calcium based mineral phase and at least one metal oxide based phase, which contains said metallic component. In particular, the invention refers to a method of reducing a chromium and an iron content of a steel slag.

Ground steel slag, a byproduct of the steelmaking process, has gained attention as an alternative raw material for cement clinker manufacturing. This is mainly due to its potential to reduce the environmental impacts associated with traditional cement production while maintaining the desired properties of cement. Steel slag is useful as an alternative raw material for cement clinker manufacturing because of its high content of decarbonated calcium oxide (up to 50-55 wt%).

Incorporating ground steel slag in cement production can significantly reduce CO₂ emissions associated with the cement manufacturing process. This is achieved through reduced limestone calcination, as well as the use of an industrial byproduct, which would otherwise require disposal or long-term storage.

On the other hand, steel slag may contain a medium-to-high content of iron (from a few % to 35 wt%) and a high concentration of chromium. Steel slag chromium concentration may vary from a few hundred ppm up to nearly 10 wt%, which limits its introduction in the raw mix. Indeed, the European regulation stipulate that cement and cement-containing mixtures shall not be placed on the market, or used, if they contain, when hydrated, more than 2 mg/kg (2 ppm) soluble chromium VI of the total dry weight of the cement.

Among the various forms of chromium, Cr(III) is dominant in natural, raw materials. The Cr(III) form is relatively nonreactive and less toxic; however, it can be oxidized into hexavalent species at high temperatures under an oxidizing atmosphere and alkaline conditions in cement kilns. Cr(VI) is the most hazardous form of chromium because of its toxicity, solubility, and mobility. The hexavalent form of chromium is acidic, forming chromates CrO₄²⁻ and dichromates Cr₂O₇²⁻. The genotoxic effects of Cr(VI) are associated with its ability to pass through cell walls and be reduced in the cell to Cr(III). Cr(III) is likely bound to phosphate DNA, inducing changes in the genetic code of the cell.

The presence of Cr(VI) compounds in cements is very dangerous in terms of their solubility and possible leaching of Cr(VI) in connection with the use of cement in concrete structures such as water tanks and pipes, which can lead to contamination of drinking water or chromium accumulation in the environment.

To mitigate the potential negative effects of a high chromium content in steel slag, it is essential to control the quality and composition of the slag used in cement clinker production. Various techniques have been suggested to reduce the chromium content.

Physical separation methods involve crushing and sieving the steel slag to separate metallic particles and other impurities from the slag. A magnetic separation method may be employed to separate chromium-rich metallic particles, thereby reducing the chromium content.

Gravity separation relies on the differences in density between slag components. Heavy liquid or dense media separation can be employed to isolate and remove chromium-rich phases from the slag.

Alternatively, steel slag may be subjected to a chemical treatment in order to reduce the chromium content by leaching. Acid leaching involves treating steel slag with a strong acid, such as hydrochloric or sulfuric acid, which can dissolve and remove chromium compounds. The acid-leached slag can then be washed and filtered to eliminate soluble chromium. Alkaline leaching uses sodium or calcium hydroxide to remove chromium from slag. The leaching process may be preceded by a roasting step, wherein the steel slag is heated in the presence of a controlled atmosphere (air or other gases) at high temperatures. The purpose of roasting is to oxidize the metallic chromium and other reducible components in the slag, transforming them into more soluble compounds that can be easily leached. However, leaching methods can be costly due to the use of high quantities of chemical agents, such as NaOH, and generate hazardous waste.

Therefore, the instant invention aims at providing an improved method, which on the one side is more effective in reducing the chromium and iron content and involves less costs. In particular, the cost shall be proportional to the fee which would be paid if an equivalent quantity of carbon dioxide was emitted at the stack of the cement manufacturing plant in case no steel slag was added to the raw material mix. More generally, the instant invention aims at providing an improved method, which effectively reduces the amount of at least one metallic component of a calcium oxide rich waste material.

In order to solve this object, the invention provides a method of reducing the amount of at least one metallic component of an input material, said input material comprising a plurality of entangled solid phases comprising at least one crystallized calcium based mineral phase and at least one metal oxide based phase, which contains said metallic component, comprising the steps of:
a) grinding the input material by applying combined compression and shearing stress to obtain particles having a particle size of < 300µm, preferably < 150µm, the particles comprising metallic particles and non-metallic particles,
b) separating the metallic particles from the non-metallic particles by means of a separator.

The invention may be applied to any waste material that contains crystallized calcium based mineral phases, the metallic component of which shall be reduced in order to make the calcium based mineral phases suitable for being recycled, reused or further processed, such as for being recycled as raw material in a raw material mix for producing cement clinker. A particular useful and commercially relevant embodiment of the invention refers to the use of steel slag as the input material.

The metallic component of the input material that is at least partially removed by the method of the invention may be any metal that is considered harmful for an intended further use of the calcium oxide based mineral phase. Preferably, the metallic component to be reduced comprises chromium and iron. Where the description of the invention refers to steel slag, such description equally applies to any waste material that contains crystallized calcium based mineral phases.

The invention is based on the observation made by means of scanning electron microscopy, that steel slag displays entangled domains of calcium, iron and chromium-rich domains, the size of the latter being usually in the 10-40um range, while they can reach 150-200µm in some particular cases. By applying combined compression and shearing stress during the grinding step a fragmentation of steel slag along the phase boundaries can be achieved so as to obtain iron and chromium-rich domains (metallic particles) on the one hand and calcium rich domains (non-metallic particles) on the other hand. This allows an efficient separation of the metallic particles from the non-metallic particles by means of a separator.

In the calcium rich domains the calcium may be present in the form of calcium oxide and calcium silicates, aluminates, and/or sorosilicates.

Applying combined compression and shearing stress allows to take advantage of the fact that the individual phases of the input material have different compression strength resistance. Generally speaking, when the material is composed of two phases (A) and (B), fragmentation first occurs within the most brittle phase (A), generating grains composed of the phase (A) on one side, and grains composed by a harder phase core (B) surrounded by the remaining (A) phase on the other side. When using a combined compression and shearing stress, the shearing forces involved (particle-particle contacts or grinding part-particle contacts) "peel" off the remaining brittle phase (A) from the (B) core when grinding is undertaken. In steel slag or other input material, the calcium based phase is generally more brittle and tends to be comminuted more easily. Calcium oxide and calcium silicates have a crystalline structure, which makes them more prone to fracture and comminution during the grinding process. The metallic phases in steel slag being iron and chromium in contrast are relatively ductile materials. As a result, the grinding process achieves a high selectivity between metallic particles and non-metallic particles. Only a limited amount of composite grains remains at the grinding equipment output, favoring the efficiency of the downstream separating process.

According to preferred embodiment of the invention the grinding step is carried out in a vertical roller mill, a roller press or a vibratory disc mill. These types of grinding devices are favorable for applying combined compression and shearing stress. Further, such grinding devices offer the possibility to fine-tune the strain applied by varying operating parameters, such as the powder bed thickness, roller/table rotation speed, the compression which is applied and the number of grinding iterations (by recycling part of the ground powder with fresh feed). This aims at liberating the input material phases progressively, for instance from the most brittle to the hardest ones, and was confirmed by a scanning electron microscope analysis, which showed that most of the particles, once ground, were composed of one mineralogical phase.

As mentioned above, the grinding process yields iron and chromium-rich domains, which are referred to as "metallic particles", and calcium rich domains, which are referred to as "non-metallic particles". Metallic particles are understood to have a higher content of iron and chromium than the input material, such as the steel slag, but still contain non-metallic components.

Non-metallic particles are understood to have a higher content of calcium than the input material, such as steel slag, but still contain metallic components. Preferably, the non-metallic particles have a chromium content by weight that is 50% or less, preferably 30% or less, of the chromium content by weight of the input material. Further, the non-metallic particles may preferably have an iron content by weight that is 50% or less, preferably 30% or less, of the iron content by weight of the input material.

Preferably, the non-metallic particles have an iron content by weight that is 50% or less, preferably 30% or less, of the iron content by weight of the metallic particles. Further, the non-metallic particles may preferably have a chromium content by weight that is 50% or less, preferably 30% or less, of the chromium content by weight of the metallic particles.

For example, the metallic particles may have a chromium content of > 4500 ppm and the non-metallic particles have a chromium content of < 1000 ppm.

The chromium content and the iron content are measured using a high performance energy dispersive X-ray fluorescence spectrometer (EDXRF), with a polarized X-ray excitation geometry (HE XEPOS, Ametek). The instrument is equipped with a 50 W Pd-Co tube (maximum 60kV, 2mA). The samples are dried and finely ground (<100 µm) before being analyzed in sample holders covered with a 4µ polypropylene film (Film Velope, Fluxana) .

Steel slag is composed of various phases which need different levels of energy to get fragmented. Since calcium silicates need less energy to get fragmented, non-metallic particles are usually obtained after a shorter grinding time and with smaller particles sizes. In contrast, metallic phases need more energy to get fragmented, so that they are present in the grinding stock with a larger mean particle size. One can take advantage of this fact by removing metallic particles from the grinding stock even before feeding the ground particles to the separating step b). In particular, a particle size based separation may be conducted by removing particles having a particle size above a given threshold value from the grinding stock by means of a suitable separating technique. Alternatively or in addition, a particle size based separation may be conducted by separating particles having a particle size below a given threshold value from the grinding stock by means of a suitable separating technique. The coarser fraction has a higher portion of metallic particles, so that removing the coarser fraction from the grinding stock avoids the necessity of grinding the entire feedstock of input material to the final particle size that is required for the separating step b).

Referring to the maximum particle size of the particles obtaining by the grinding step of the invention, the maximum particle size may be determined by means of sieving, using for example ASTM E11 test sieves.

In a preferred embodiment, the particles obtained by said grinding step have a particle size distribution having a D10 of > 7 µm, preferably > 10 um. It was indeed found that the process of the present invention is most efficient when the particles are ground to a level that maximizes the separation of the mineralogical phases of the input material, without further grinding.

The minimum particle size corresponds to a D10 value (volume based), measured by means of laser diffraction, for example with a Mastersizer 2000 provided by Malvern. The measurement is here carried out by dispersing beforehand the particles in water and subjecting this dispersion to ultrasounds so as to de-agglomerate the particles.

Further, a fine fraction may at least partially be withdrawn from the grinding device by means of an air separator. This avoids overgrinding of the said fine fraction.

Turning now to the separation step b) of the method of the invention, any separation technique may be used that is able to separate the metallic particles from the non-metallic particles by means of a separator. Separation has to be seen here as a tool exploiting differences in terms of chemical and/or physical properties, such as size, shape, mass, density, or chemical affinity, between the mineralogical phases composing the input material, i.e. between the metallic and the non-metallic particles. Preferably, the step of separating the metallic particles from the non-metallic particles comprises a magnetic separation, a separation by flotation, a separation by flocculation, a separation by gravity/density, a triboelectric separation and/or an electrostatic separation.

The step of separating the metallic particles from the non-metallic particles may comprise one separation process or at least two consecutive separation processes. In the case of at least two consecutive separation processes, the separation processes may be configured to operate according to different separation techniques or according to the same separation technique. In the case of at least two successive separation processes using the same separating technique, the successive steps may preferably be operated with different parameters of the same separation technique. For example, in case of magnetic separation, the successive steps may be operated with increasing magnetic field intensity.

Magnetic separation is a particularly preferred separation technique used in the instant invention. The basic concept of a magnetic separation is that magnetically susceptible particles or bodies are separated from non-magnetic particles when submitted to a defined magnetic field intensity. Magnetic separation may be performed in dry mode for particles displaying a particle size distribution above 150 um, while a liquid mode is preferred below 150 um to get rid of short-range interparticular interactions. Considering the typical size of the particles to be separated in the method of the invention, the liquid version is favored here.

Preferably, the magnetic separation is carried out in a Wet High Intensity Magnetic Separator (WHIMS). The WHIMS technique is especially useful for the separation of weakly magnetic materials, such as most chromium-containing spinels, from non-magnetic or less magnetic materials, such as the crystallized calcium based minerals of the input material.

The WHIMS process involves the following steps:
1. Slurry preparation: The metallic and non-metallic particles are mixed with water to create a slurry, which allows the particles to flow freely and ensures a consistent feed to the separator.
2. Slurry feeding: The slurry is introduced to the WHIMS unit, where it flows through a separation chamber containing a magnetic field generated by an electromagnet.
3. Magnetic separation: The magnetic field within the separation chamber attracts the metallic particles, causing them to separate from the non-metallic particles. The strength and gradient of the magnetic field can be adjusted to optimize the separation efficiency.
4. Collection: The separated metallic particles are collected and transported away from the non-metallic materials.
5. Dewatering: The metallic and the non-metallic particles are dewatered to prepare them for further processing or use.

A WHIM Separator is efficient for some materials (for instance the ladle slag described in the example), because it enables to "magnetically trap" grains with low magnetic susceptibility (*i.e*., *the spinels*)*.*

On the other hand, Low Intensity or Medium Intensity Magnetic Separator, are recommended for the other steel slags, for instance those coming from Basic Oxygen Furnaces, because part of the total chromium is contained in phases like magnetite or wüstite which are removed at lower intensity (with permanent magnets).

Preferably, the magnetic separator, such as a Low Intensity Magnetic Separator (LIMS), is designed as a wet drum magnetic separator, wherein a rotating drum is partly immersed into the slurry, the slurry being fed through a gap formed between the drum and a cylindrical housing either in concurrent or counter current direction with the direction of rotation. In doing so, the metallic particles are attracted by the magnetic field, collected on the drum surface, and rotated out of the slurry flow.

According to an alternative embodiment, the metallic particles are separated from the non-metallic particles by flotation. Flotation is a traditional process for extracting selected minerals from their ores. Its basic principle consists in coating finely ground mineral(s) of interest with a small amount of chemical to make them float. The mineral particles are coated by agitating a pulp of ore, water, and suitable chemicals; the latter bind to the surface of the mineral particles and make them hydrophobic. The unwetted particles adhere to air bubbles and are carried to the upper surface of the pulp, where they enter the froth; the froth containing these particles can then be removed. Unwanted minerals that naturally resist wetting may be treated so that their surfaces will be wetted and they will sink.

According to an alternative embodiment, the metallic particles are separated from the non-metallic particles by triboelectrostatic separation. Triboelectrostatic separation is based on the differences in surface properties of granular materials that charge with opposite polarity by surface contact or triboelectric charging. When two materials are in contact, material with a higher affinity for electrons gains electrons and thus charges negative, while material with lower electron affinity charges positive. This contact exchange of charge is universally observed for all materials.

In the following, the invention will be explained by reference to the following examples.

### Example 1

The input material is a granular steel slag with a particle size of < 3.15 mm, having the following content of Fe, Ca and Cr, measured by using a high performance energy dispersive X-ray fluorescence spectrometer (EDXRF):

| | |
|---|---|
| Fe content [wt.-%]: | 10 |
| Ca content [wt.-%]: | 37 |
| Cr content [ppm]: | 4106 |

The granular steel slag was subjected to a grinding step in a vibratory disc mill that applied a combined compression and shearing stress to the granular steel slag. The grinding was carried out to obtain particles having a particle size of < 200µm, preferably < 120um, the particles comprising metallic particles and non-metallic particles. The grinding stock was sieved using a mesh opening of 100um. The resulting material (mixture of metallic and non-metallic particles having a particle size of < 100pm) had the following content of Fe, Ca and Cr, measured by using a high performance energy dispersive X-ray fluorescence spectrometer (EDXRF):

| | |
|---|---|
| Fe content [wt.-%]: | 3.8 |
| Ca content [wt.-%]: | 44 |
| Cr content [ppm]: | 1185 |

It can be seen that separating a fine fraction of the particles from the grinding stock already results in a reduction of the Fe and the Cr content and an increase of the Ca content, because particles having a high Fe and Cr content are more likely to be present in the coarse fraction than in the fine fraction.

Further, the particles obtained after grinding and sieving were subjected to a WHIMS separation with a magnetic field of 11k Gauss. The resulting non-metallic particles separated from the metallic particles had the following content of Fe, Ca and Cr:

| | |
|---|---|
| Fe content [wt.-%]: | 1.6 |
| Ca content [wt.-%]: | 47 |
| Cr content [ppm]: | 909 |

Thus, the resulting Ca rich non-metallic particles have a sufficiently low Cr content for being used as a raw material in a raw material mix for producing cement clinker.

### Example 2

Example 2 corresponds to Example 1, except that the grinding stock was sieved using a mesh opening of 40um instead of 100µm. The resulting material (mixture of metallic and non-metallic particles having a particle size of < 40µm) had the following content of Fe, Ca and Cr:

| | |
|---|---|
| Fe content [wt.-%]: | 3.2 |
| Ca content [wt.-%]: | 45 |
| Cr content [ppm]: | 966 |

Therefore, selecting an even finer fraction of the grinding stock results in a further reduction of the Cr and Fe content.

After the magnetic separation step the non-metallic particles separated from the metallic particles had the following content of Fe, Ca and Cr:

| | |
|---|---|
| Fe content [wt.-%]: | 1.6 |
| Ca content [wt.-%]: | 47 |
| Cr content [ppm]: | 764 |

This amounts to a reduction of the Cr content of more than 80% compared to the original input material.

### Example 3 (reference example)

Example 3 corresponds to Example 1except that a ball mill was used instead of a vibratory disc mill.

After sieving the grinding stock using a mesh opening of 100µm, the resulting mixture of metallic and non-metallic particles had the following content of Fe, Ca and Cr:

| | |
|---|---|
| Fe content [wt.-%]: | 6.5 |
| Ca content [wt.-%]: | 40 |
| Cr content [ppm]: | 3018 |

After the magnetic separation step the non-metallic particles separated from the metallic particles had the following content of Fe, Ca and Cr:

| | |
|---|---|
| Fe content [wt.-%]: | 2.9 |
| Ca content [wt.-%]: | 44 |
| Cr content [ppm]: | 1839 |

It can be seen that using a ball mill, in which the steel slag is subjected to impact and attrition stresses, but not to shearing and compression stresses, results in a considerably less effective reduction of the Fe and Cr content of the input material.

The results of Examples 1, 2 and 3 are summarized in the following table:

| | | Example 1 | Example 2 | Example 3 |
|---|---|---|---|---|
| | Grinding equipment | Vibratory | disc mill | Ball mill |
| | Mesh opening [µm] | 100 | 40 | 100 |
| Input material | Fe content [wt.-%] | 10 | | |
| | Ca content [wt.-%] | 37 | | |
| | Cr content [ppm] | 4106 | | |
| After grinding and sieving | Fe content [wt.-%] | 3.8 | 3.2 | 6.5 |
| | Ca content [wt.-%] | 44 | 45 | 40 |
| | Cr content [ppm] | 1185 | 966 | 3018 |
| After WHIMS | Fe content [wt.-%] | 1.6 | 1.6 | 2.9 |
| | Ca content [wt.-%] | 47 | 47 | 44 |
| | Cr content [ppm] | 909 | 764 | 1839 |

### Example 4

The input material is a granular basic oxygen furnace slag (BOFS) with a particle size of < 3.15mm, having the following content of Fe, Ca and Cr:

| | |
|---|---|
| Fe content [wt.-%]: | 23 |
| Ca content [wt.-%]: | 35 |
| Cr content [ppm]: | 1146 |

The granular slag was subjected to a grinding step in a vibratory disc mill that applied a combined compression and shearing stress to the granular slag. The grinding was carried out to obtain particles having a particle size of < 300 um, preferably < 150 µm, the particles comprising metallic particles and non-metallic particles. The grinding stock was sieved using a mesh opening of 40 µm. The resulting material (mixture of metallic and non-metallic particles having a particle size of < 40um) had the following content of Fe, Ca and Cr:

| | |
|---|---|
| Fe content [wt.-%]: | 17 |
| Ca content [wt.-%]: | 42 |
| Cr content [ppm]: | 1013 |

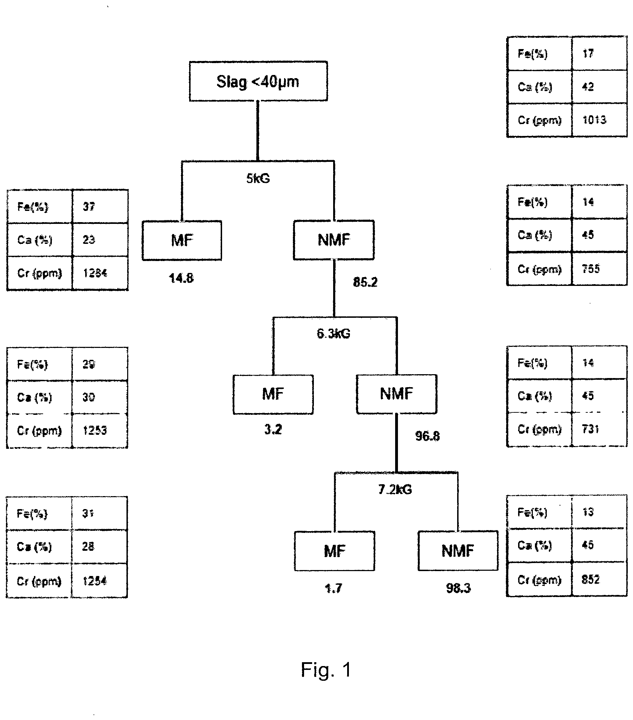

Further, the particles obtained after grinding and sieving were subjected to a WHIMS separation comprising three successive separation processes, the first with a magnetic field of 5k Gauss, the second with a magnetic field of 6.3k Gauss and the third with a magnetic field of 7.2k Gauss, as illustrated in Fig. 1 (NF = metallic fraction, NMF = non-metallic fraction). The resulting non-metallic particles separated from the metallic particles had the following content of Fe, Ca and Cr:

| | |
|---|---|
| Fe content [wt.-%]: | 13 |
| Ca content [wt.-%]: | 45 |
| Cr content [ppm]: | 852 |

## Claims

1. A method of reducing the amount of at least one metallic component of an input material, said input material comprising a plurality of entangled solid phases comprising at least one crystallized calcium based mineral phase and at least one metal oxide based phase, which contains said metallic component, comprising the steps of:
a) grinding the input material by applying combined compression and shearing stress to obtain particles having a particle size of < 300 µm, preferably < 150 um, the particles comprising metallic particles and non-metallic particles,
b) separating the metallic particles from the non-metallic particles by means of a separator.

2. The method according to claim 1, wherein the particles obtained by said grinding step have a particle size distribution having a D10 of > 7 um, preferably > 10 µm.

3. The method according to claim 1 or 2, wherein the metallic component comprises chromium and iron.

4. The method according to claim 1, 2 or 3, wherein the input material is steel slag.

5. The method according to any one of claims 1 to 4, wherein the non-metallic particles have a chromium content by weight that is 50% or less, preferably 30% or less, of the chromium content by weight of the input material.

6. The method according to any one of claims 1 to 5, wherein the non-metallic particles have an iron content by weight that is 50% or less, preferably 30% or less, of the iron content by weight of the input material.

7. The method according to any one of claims 1 to 6, wherein the non-metallic particles have an iron content by weight that is 50% or less, preferably 30% or less, of the iron content by weight of the metallic particles.

8. The method according to any one of claims 1 to 7, wherein the non-metallic particles have a chromium content by weight that is 50% or less, preferably 30% or less, of the chromium content by weight of the metallic particles.

9. The method according to any one of claims 1 to 8, wherein the metallic particles have a chromium content of > 4500 ppm.

10. The method according to any one of claims 1 to 9, wherein the non-metallic particles have a chromium content of < 1000 ppm.

11. The method according to any one of claims 1 to 10, wherein said step of grinding is carried out in a vertical roller mill, a roller press or a vibratory disc mill.

12. The method according to any one of claims 1 to 11, wherein said step of separating the metallic particles from the non-metallic particles comprises at least two consecutive separating processes.

13. The method according to any one of claims 1 to 12, wherein said step of separating the metallic particles from the non-metallic particles comprises a magnetic separation, a separation by flotation, a separation by flocculation, a separation by gravity, a triboelectric separation and/or an electrostatic separation.
